# EUROPEAN PATENT SPECIFICATION

(11) **EP 0 863 040 B1**
(45) Date of publication and mention of the grant of the patent: **18.06.2003**
(21) Application number: 98101833.6
(22) Date of filing: 03.02.1998
(51) Int. Cl.: B60K 41/20, B62D 49/06, G05G 5/14, B60K 41/26, A01D 34/64

(54) **Interlocked gear hold and brake pedal mechanism for hydraulic transmission of a ride-on mower**
Verriegelungssystem zwischen Bremse und Getriebe eines Rasenmähers
Interverrouillage freinage/sélecteur vitesse pour une transmission dans un tondeuse à gazon avec place fixe

(30) Priority: 05.03.1997 JP 5064997
(43) Date of publication of application: 09.09.1998
(73) Proprietor: KANZAKI KOKYUKOKI MFG. CO., LTD., Amagasaki-Shi, Hyogo-Ken (JP)
(72) Inventor: Matsufuji, Mizuya, Amagasaki-shi, Hyogo-ken (JP)
(74) Representative: Henkel, Feiler, Hänzel

(56) References cited:
- FR-A- 2 677 587
- US-A- 3 837 235
- US-A- 4 314 617
- US-A- 4 759 417
- PATENT ABSTRACTS OF JAPAN vol. 13, no. 418 (M-871), 18 September 1989 & JP 01 156160 A (KUBOTA), 19 June 1989

## Description

### Field of The Invention

The present invention relates to a parking lock mechanism for brake pedals which operate braking units and a cruising control mechanism for a speed change pedal which operates a stepless transmission, both of the mechanisms being equipped on a working vehicle.

### Background of The Invention

Conventionally, a construction has been well-known, in which on a step at one lateral side of the vehicle is disposed a speed change foot pedal which can change the traveling speed and can freely switch to the forward or rearward traveling direction, on the other lateral side are disposed two left and right turn brake pedals which can independently brake left and right braking units, and one master brake pedal is disposed in the vicinity of the speed changing pedal, such the construction being disclosed in, for example, the Japanese Patent Publication JP 1156160.

Also, a construction is well-known which includes a pair of left and right brake pedals connected with a pair of left and right braking units, a speed change pedal for operating a hydraulic stepless transmission, a cruising control mechanism for locking the speed change pedal at a desired speed change position, and a releasing mechanism for releasing the braking state of speed change pedal when the left and right braking units are simultaneously operated, such the construction being disclosed in, for example, the Japanese Utility Model Laid-Open No. Hei 2-108116.

In the above-mentioned conventional constructions, in the former case, it is disclosed that; the left and right turn brake pedals are trod respectively so as to enable the left and right braking units to be independently operated; and when the master brake pedal is trod, an interlocking member simultaneously abuts against a connecting member of a right outer cylinder and an abutting member of a brake shaft so as to simultaneously operate the left and right braking units; but cruising control mechanism, which can fix and release a desired forward running operation position of the running pedal, is not provided.

In the latter case, the locking mechanism for speed change pedals is provided so that the braking state of speed change pedal cannot be released without simultaneously treading the left and right brake pedals, the mounting portion of the locking mechanism being directly mounted to a vehicle frame, which is troublesome to be assembled. Also, no parking locking mechanism for the braking pedal is provided.

Furthermore, a traveling operation device in accordance with the preamble of claim 1 is known from US-4 759 419 and comprise a parking lock mechanism and a cruise control mechanism arranged both at the same side of the vehicle body frame.

### Summary of The Invention

The present invention as claimed provides an improved system wherein the parking lock mechanism and the cruise control mechanism are disposed at one and the other side of a vehicle body frame within a dash board, so that the effect by entering dust or water therein is reduced and the mechanisms are more compact and simple in construction.

A cruising control mechanism, which can artificially hold a speed changing unit of a stepless transmission biased to the neutral position in a desired speed change position and is connected to release the locking action by treating a master brake pedal, is disposed at one action by treading master brake pedal, is disposed at one lateral side within a dashboard; and a parking lock mechanism, which can hold the master brake pedal at one treading position, is disposed at the other lateral side within the same.

Furthermore, the operating unit for actuating the cruising control mechanism and that for actuating the parking lock mechanism are disposed on the dashboard. Meanwhile, a locking pawl engageable with a locking member interlocking with the speed change unit of the stepless transmission is pivotally supported on one lateral side wall of a vehicle body frame covered with the lower end of the dashboard in relation of being swingable interlocking with the speed changing unit of the stepless transmission, and a locking pawl engageable with a locking member interlocking with the master brake pawl is pivotally supported onto the other lateral side wall of the same in the same relation as the above.

In the above-mentioned first and second structures, the speed changing unit comprises a forward foot pedal trod when the vehicle forwardly travels and a reverse foot pedal trod when the same rearwardly travels, both pedals being constructed to single-body pedal units mountable or detachable on or from the one lateral side wall of the vehicle body frame.

Also, in the above-mentioned first, second and third constructions, on the rear surface of the dashboard, the operating unit for actuating the cruising control mechanism is disposed on the one lateral side where the cruising control mechanism is disposed. The operating unit for actuating the parking lock mechanism is disposed on the other lateral side where the mechanism is disposed.

These and other objects of the invention will become more apparent in the detailed description and example which follow.

### Brief Description of The Drawings

Fig. 1 is a left side view of a working vehicle equipped with the traveling operating device of the invention,
Fig. 2 is a sectional rear view showing mounting positions for a cruising control mechanism and a parking locking mechanism,
Fig. 3 is a sectional plan view of left and right brake pedals and a parking locking mechanism,
Fig. 4 is a left side view of the same,
Fig. 5 is a left side view of the same when parking-locked,
Fig. 6 is a sectional plan view showing a speed change operating unit and the cruising control mechanism,
Fig. 7 is a right side view of the same,
Fig. 8 is a perspective view of the same,
Fig. 9 is a perspective view of a pedal bracket,
Fig. 10 is a right side view of the cruising control mechanism when speed-change is locked,
Fig. 11 is a perspective rear view of the dashboard showing the mounting construction thereto of a cruise control lever and parking lever which are operating units for the cruising control mechanism and parking locking mechanism,
Fig. 12 is a perspective view of an abutting timing adjusting mechanism for a master brake pedal when equipped with an equalizer, and
Fig. 13 is a partially sectional front view of the same.

### Detailed Description of The Preferred Embodiment of The Invention

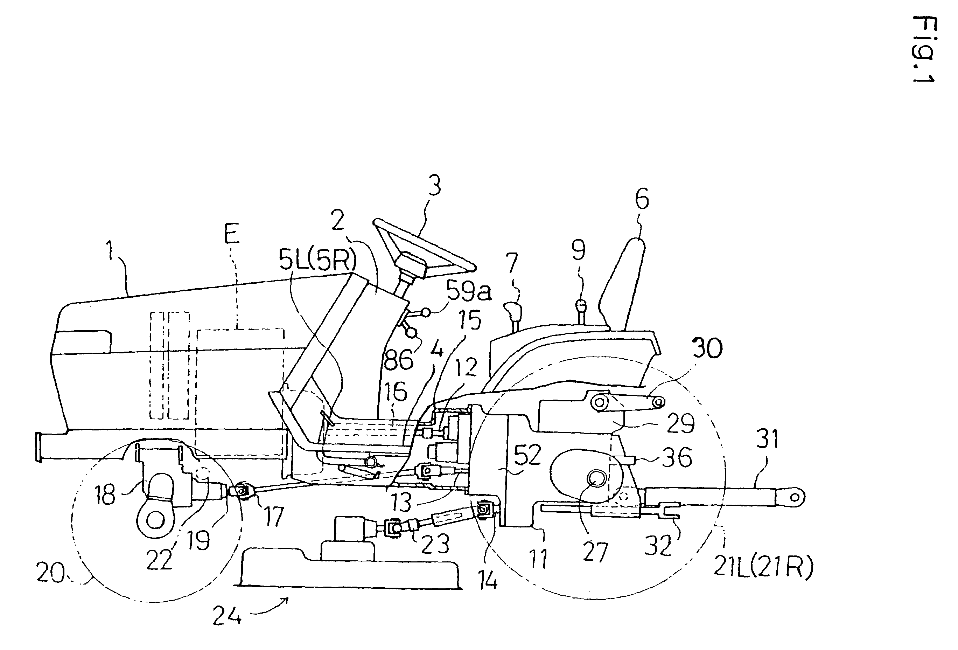

In Fig. 1, explanation will be given on an entire construction of a working vehicle equipped with the traveling operation device of the present invention and provided under the vehicle body with a mower. An engine E is mounted on a body frame within a bonnet 1 in front of the vehicle body; a dashboard 2 is connected to the rear portion of the bonnet 1; a steering wheel 3 is disposed on the dashboard 2; steps 4, through which an operator gets on and off the vehicle, are disposed between the dashboard 2 and a seat 6 and project from both lateral sides of the vehicle body; and a sub-speed-changing hand lever 7 and a PTO switching hand lever 9 are disposed at the lateral side of the seat 6.

Under the seat 6 is disposed a transmission casing 11, which is connected with the engine E through a vehicle body frame 15 fixed to the front of the transmission casing 11, so that power from the engine E is transmitted into the transmission casing 11 through a damper joint housed in the vehicle body frame 15, a transmission shaft 16 and an input shaft 12. From the front of the transmission casing 11 project the input shaft 12, a front wheel driving shaft 13 and a mid-PTO shaft 14. The power outputted from the front wheel driving shaft 13 is transmitted into a front axle casing 18 through a universal joint 17 so as to drive front wheels 20 mounted onto front axles projecting from both sides of the front axle casing 18, the power outputted from the mid-PTO shaft 14 being transmitted through a universal joint 23 to a mower 24 for lawn-mowing.

A rear axle casing is mounted at both sides of the rear of transmission casing 11 and rear wheels 21L and 21R are mounted to rear axles. In the transmission casing 11 is integrally provided a hydraulic stepless speed change unit 52 so that a forward foot pedal 8F and a reverse foot pedal 8R to be discussed below are operated so as to enable the rear wheels 21L and 21R to be desirably set the driving direction and driving speed thereof. On the upper surface of the transmission casing 11 is mounted a hydraulic lifting unit 29 provided with a lift arm desirably operable upwardly and downwardly, the working machine, such as a cultivator, being able to be mounted to the rear portion of the vehicle through a lower link 31 rearwardly projecting from the both sides of the lower portion of transmission casing 11, the lift arm 30 and a top link (not shown). A rear PTO shaft 36 projects from the rear surface of the transmission casing 11, so that the working machine driven by the power outputted form the rear PTO shaft 36.

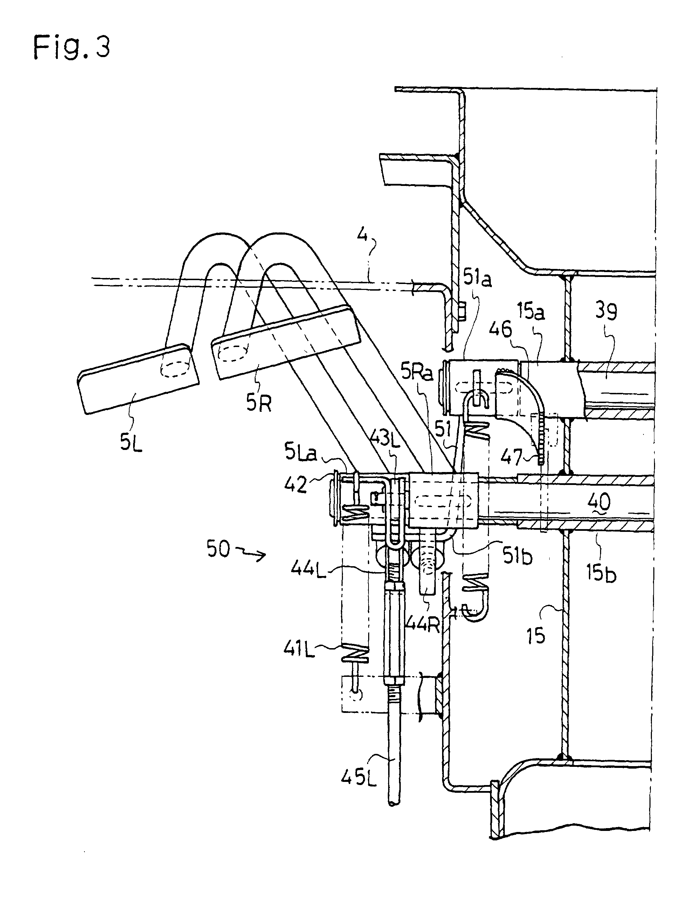

Next, explanation will be given on a brake operating unit equipped on the working vehicle. As shown in Figs. 1, 2, 3 and 6, a left turn brake foot pedal 5L and a right turn brake foot pedal 5R are juxtaposed on the step 4 at the left side looking in the forward running direction of the vehicle body frame 15, a forward pedal 8F and a reverse pedal 8R are juxtaposed on the right side step 4, and a master brake pedal 10 having a length across both the pedals 8F and 8R is disposed in front of and slightly above the pedals 8F and 8R.

Two support pipes 15a and 15b extending laterally of the vehicle body frame 15 are fixedly disposed longitudinally of the vehicle body frame 15 in parallel to each other. A first brake pedal shaft 39 is rotatably supportingly inserted into a front support pipe 15a and outwardly projects at both the lateral ends thereof from the ends of the support pipe 15a. A second brake pedal shaft 40 is rotatably supportingly inserted into the rear support pipe 15b and outwardly projects at both the lateral ends thereof from the ends of the support pipe 15b. On the left end of second brake pedal 40 are juxtaposed a tubular member 5La fixed to the base of the left turn brake pedal 5L and a tubular member 5Ra fixed to the base of the right turn brake pedal 5R, the tubular members 5La and 5Ra being axially locked by a snap ring 42. The tubular member 5La is fitted relative-rotatably with respect to the second brake pedal shaft 40 and an arm 43L and an abutting strip 44L project from the outer periphery of the tubular member 5La, the arm 43L being connected with one end of a link 45L and the other end thereof being connected with brake arm (not shown) of a left braking unit (not shown) for braking the rear wheel 21L generally constructed on the left side rear axle casing.

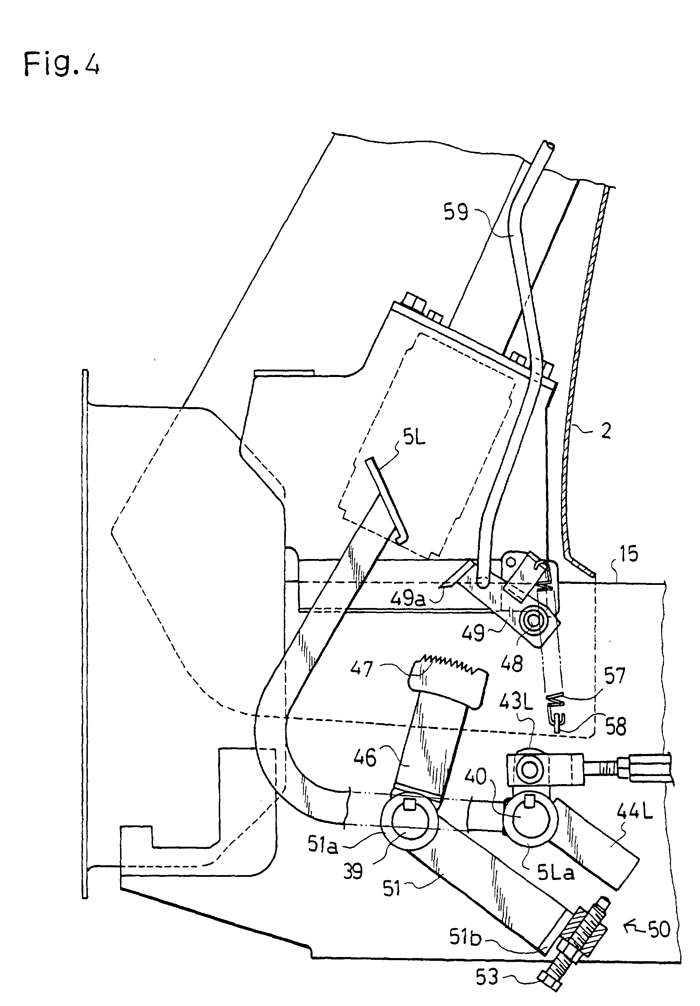

The tubular member 5Ra positioned inwardly of the vehicle body more than the tubular member 5La is not-relative-rotatably connected through a key to the second brake pedal shaft 40 and an abutting strip 44R projects from the outer periphery thereof. The right turn brake pedal 5R and left turn brake pedal 5L are constructed at the utmost ends of the arms which project slantingly forwardly and upwardly from the tubular members 5Ra and 5La and bend halfway in U-like shape respectively, so that the pedal faces are positioned in the same plane. The abutting strips 44L and 44R project slantingly rearwardly and downwardly from the tubular members 5La and 5Ra and have both their abutting surfaces positioned in the same plane with respect to a pair of abutting members 53 to be discussed below. A tubular member 5Rb is not-relative-rotatably connected to the right side end of the second brake pedal shaft 40 through a pin, and an arm 43R projects from the tubular member 5Rb and connects with one end of a link 45R, the other end thereof being connected to a brake arm (not shown) of the right side braking unit (not shown) for braking a rear wheel 21R generally constructed on the right side rear axle casing. Tension springs 41L and 41R are stretched between the arms 43L and 43R and the retaining portions on the lower surfaces of the left and right steps 4 so as to bias the left and right braking units in the brake releasing directions respectively. One of the left and right turn brake pedals 5L and 5R is trod to rotate the tubular members 5La and 5Ra counterclockwise when viewed in Fig. 4, so that the arms 43L and 43R pull the links 45L and 45R against the tension springs 41L and 41R so as to enable the left and right braking units to be independently controlable through the braking arms (not shown), thereby braking either one of the rear wheels 21L and 21R and enabling the vehicle body to be turned.

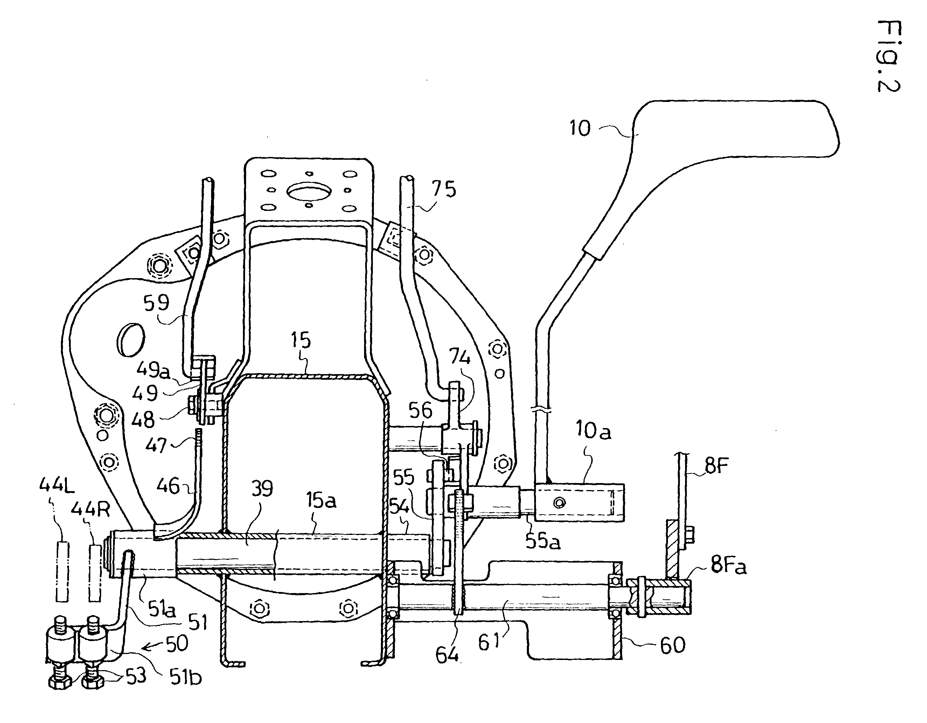

Also, the axially left end of the first brake pedal shaft 39 is provided with a simultaneous brake operating mechanism 50 for operating with the master brake pedal 10 the left turn brake pedal 5L and right turn brake pedal 5R in relation of being simultaneously trod. Namely, as shown in Figs. 2, 3 and 4, a tubular member 51a is not-relative-rotatably connected to the axially left end of the first brake pedal shaft 39 through a key, and an abutting arm 51 L-like-shaped when viewed in plan is fixed to the tubular member 51a. The abutting arm 51 is longitudinally bent at the utmost end thereof so as to form a leg 51b of length across the abutting strips 44L and 44R, the leg 51b being provided with bolt-like-shaped abutting members 53 as an adjusting mechanism of timing for the abutting strips 44L and 44R. The abutting members 53 are screwably attached to the leg 51b of abutting arm 51 in the relation that they freely advance and retreat at the upper ends thereof to keep a predetermined gap with respect to the lower surface of the abutting strips 44L and 44R.

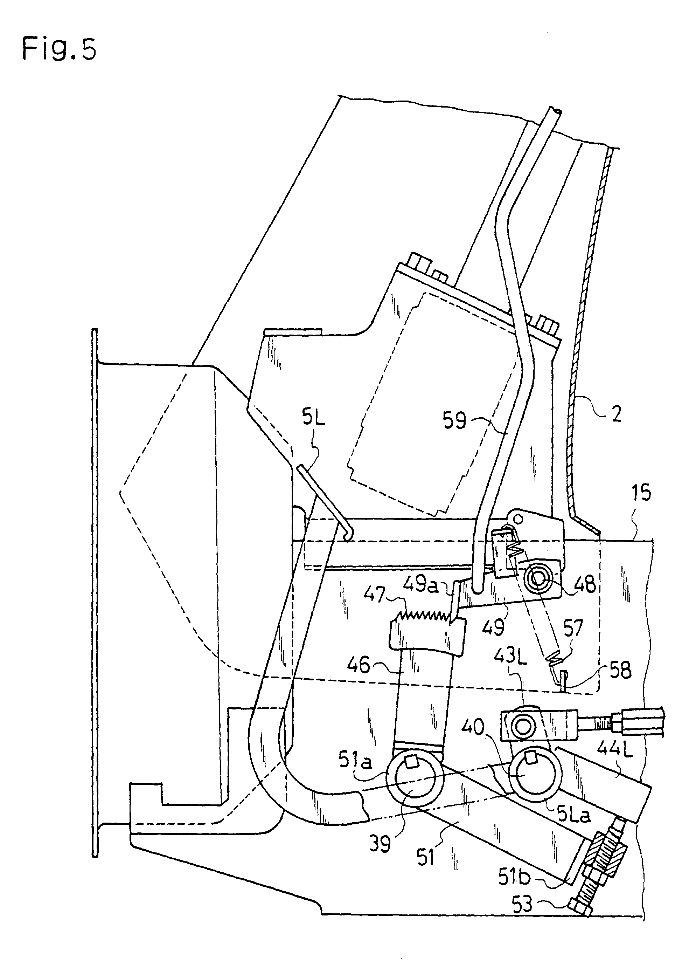

On the other hand, a tubular member 54 provided with a mounting bracket 55 is coupled with the axially right end of the first brake pedal shaft 39 through a key, a pin 55a extending in parallel to the first brake pedal shaft 39 projects from the outer side surface of the mounting bracket 55a, and a tubular member 10a fixed to the base of the master brake pedal 10 is coupled with the pin 55a through a pin. Accordingly, when the master brake pedal 10 is trod, the first brake pedal shaft 39 rotates through the mounting bracket 55, the abutting arm 51 counterclockwise rotates when viewed in Fig. 5 through the tubular member 51a, the abutting members 53 push the lower surfaces of the abutting strips 44L and 44R so as to counterclockwise rotate the tubular members 5La and 5Ra to downwardly press the left and right turn brake pedals 5L and 5R in the state of simultaneously treading both the pedals 5L and 5R, so that the left and right braking units are simultaneously actuated to enable the vehicle to stop.

Also, a parking lock mechanism is provided which can be locked in the state that the master brake foot pedal 10 is trod to simultaneously brake the left and right turn brakes. From the tubular member 51a, an arm 46 upwardly projects, a ratchet 47 in a circular arc is fixed to the upper end of the arm 46, and a large number of teeth are formed longitudinally in a row on the upper surface of the ratchet 47. A support shaft 48 projects from the outer side surface of the vehicle body frame 15 positioned rearwardly and upwardly of the ratchet 47, a lock arm 49 is pivotally supported to the support shaft 48, and a downwardly extending lock pawl 49a is formed at the free end of the lock arm 49 and disposed above the ratchet 47 so as to be engageable therewith.

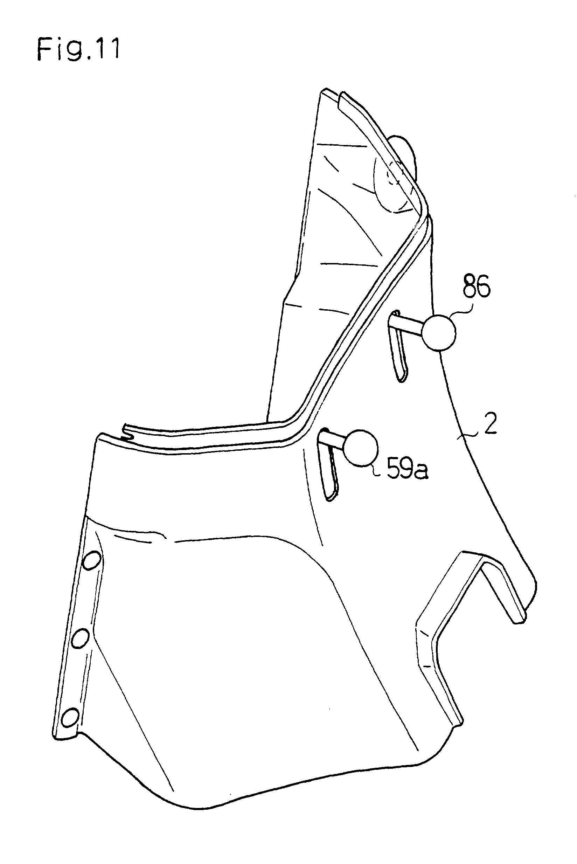

A stay 58 projects from the side surface of the vehicle body frame 15 below the support shaft 48, and a spring 57 is stretched between the stay 58 and the lock arm 49, so that the spring 57 moves beyond the fulcrum so as to enable the lock pawl 49a to be held in one of the positions where the lock pawl 49a engages with or disengages from the ratchet 47. Also, a rod 59 is fixed at the lower end thereof to the lock arm 49 and is, as shown in Fig. 11, connected at the upper end with a parking lever 59a projecting rearwardly from the one lateral side (the left side in this embodiment) of the rear surface of the dashboard 2 so that the operator can rotatably operate the parking lever 59a. A parking locking mechanism comprising the rod 59, lock arm 49 and ratchet 47 and so on, is housed in a leftwardly lower space in the dashboard 2 and covered therewith. In such construction, in a case that the parking lock is done, when the parking lever 59a is lifted and the rod 59 is pushed down in the state of treading the master brake pedal 10, the lock arm 49, as shown in Fig. 5, counterclockwise swings around the support shaft 48, the lock pawl 49a engages with the ratchet 47, so that the engagement is maintained by the movement of spring 57 beyond the fulcrum thereof, whereby, even when the master brake pedal 10 is released, it is in the locking state so as to maintain both the locking units in exerting the brake. And, when the parking lever 59a is pushed down and the rock arm 49 is lifted, the rock arm 49 is, as shown in Fig. 4, clockwise swung around the support shaft 48, the lock pawl 49a disengages from the ratchet 47 to be kept in this state by the movement of spring 57 beyond the fulcrum thereof, whereby the master brake pedal 10 returns to the original position and both the locking units are released from the braking action.

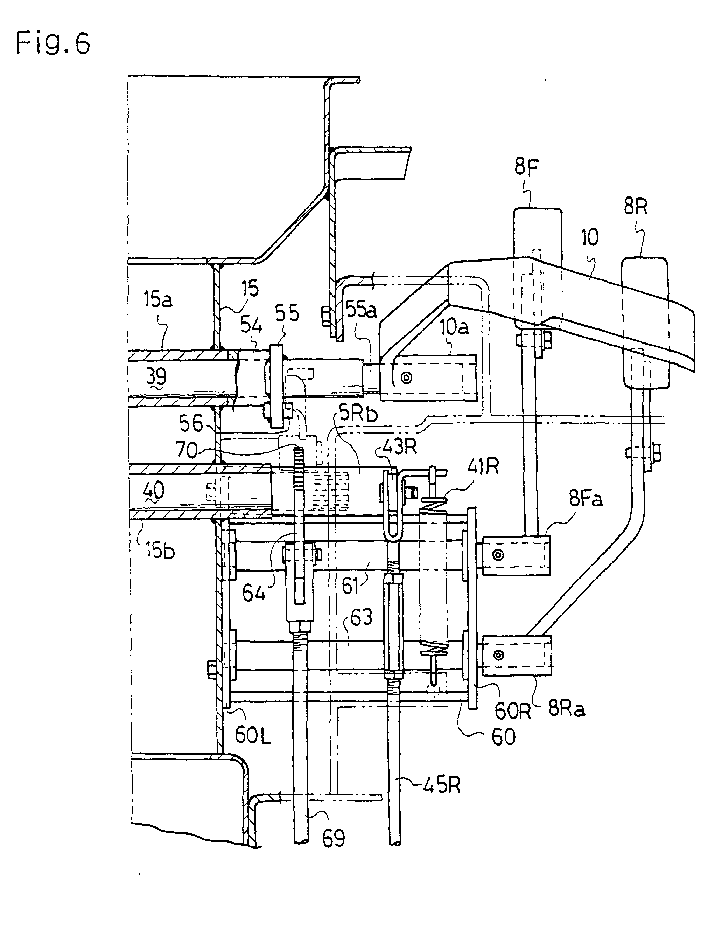

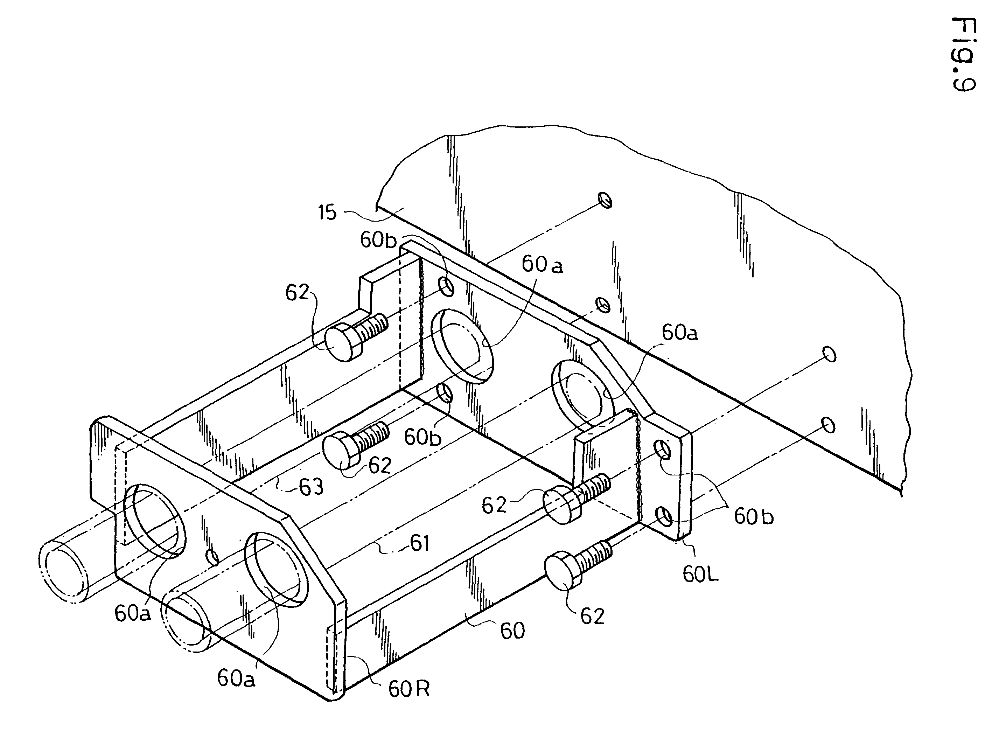

Next, explanation will be given on an operating mechanism for stepless-controlling the travelling direction and speed of the vehicle body. As shown in Figs. 6 and 9, a pedal bracket 60, which is formed at the fore, rear, left, and right thereof with longer plates so as to be rectangular when viewed in plan, is mounted onto the right side surface of the vehicle body frame 15 and under the right side step 4. At the side plates 60L and 60R of the pedal bracket 60, shaft bores 60a are open and laterally aligned with each other, and first pedal shaft 61 and second pedal shaft 63 are pivotally supported through bearings in the state of being longitudinally parallel to each other so as to construct a pedal unit. At the left side plate 60L are open bolt bores 60b, so that the pedal unit is detachably mounted onto the right side surface of the vehicle body frame 15 through bolts 62 inserted into the bolt bores 60b respectively.

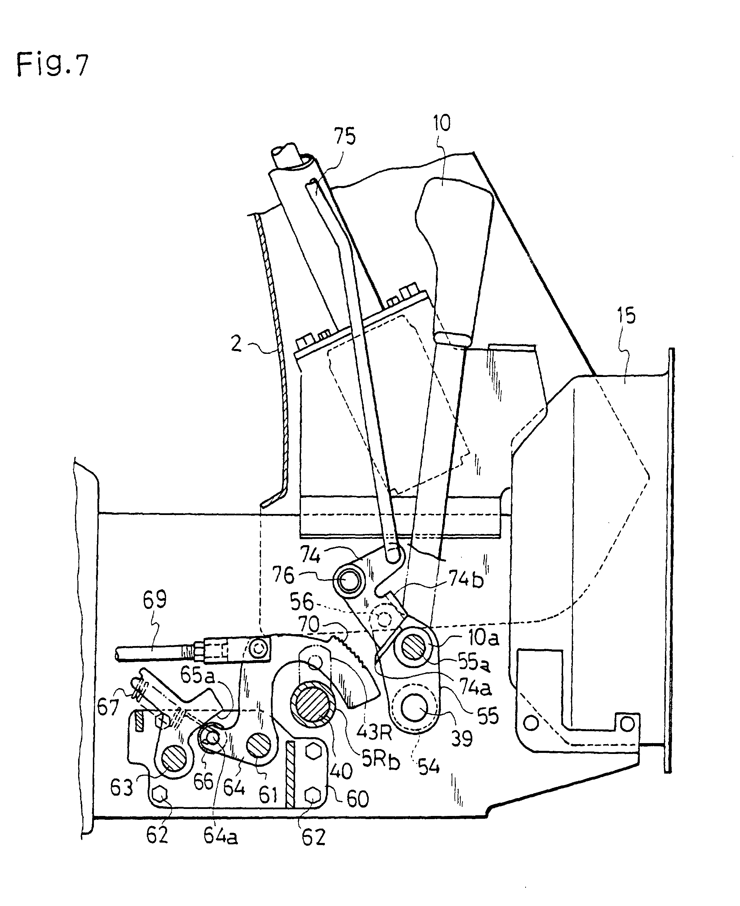

A tubular member 8Fa fixed to the base of the forward pedal 8F is coupled with one axial end of the first pedal shaft 61 through a pin, and a tubular member 8Ra fixed to the base of the rearward running pedal 8R is coupled with the same axial end of the second pedal shaft 63 through a pin. Onto the first pedal shaft 61 is fixed an arm 64 which is V-like-shaped when viewed from the side and has first and second legs (see Fig. 7), and a roller 66 is rotatably supported to a pivot pin 64a provided on the first leg of the arm 64. On the other hand, onto the second pedal shaft 63 is fixed an arm 65 provided with an abutting leg 65a with respect to the roller 66, and a spring 67 is stretched between the arm 65 and the pivot pin 64a so as to bias the abutting leg 65a to permanently abut against the roller 66. A link 69 is connected at one end thereof to the second leg of the arm 64 and at the other end to the speed control arm (not shown) of the hydraulic stepless speed change unit 52.

In the above-mentioned construction, in a case that, for example, the forward pedal 8F is trod, the arm 64 rotates clockwise around the first pedal shaft 61 in Fig. 7, the link 69 is pulled frontward of the vehicle body and the speed control arm (not shown) forwardly swings from the neutral position, so that the hydraulic stepless transmission 52 is operated to increase the speed for forwardly traveling the vehicle. Also, when the reverse pedal 8R is trod, the arm 65 clockwise rotates around the second running pedal shaft 63 and the abutting leg 65a allows the arm 64 to counterclockwise rotate through the roller 66, so that the link 69 is pushed rearwardly of the vehicle body and the speed control arm (not shown) rearwardly swings from the neutral position, thereby operating the hydraulic stepless transmission 52 to accelerate the vehicle toward the rearwardly travelling side. In addition, the forward pedal 8F and reverse pedal 8R, when released from the operator's foot, is subject to a neutral biasing force of spring acting on the speed control arm (not shown) and to the hydraulic reaction of the hydraulic stepless transmission 52 so as to automatically return to the neutral (original) position of the forward or the rearward running pedal 8F or 8R.

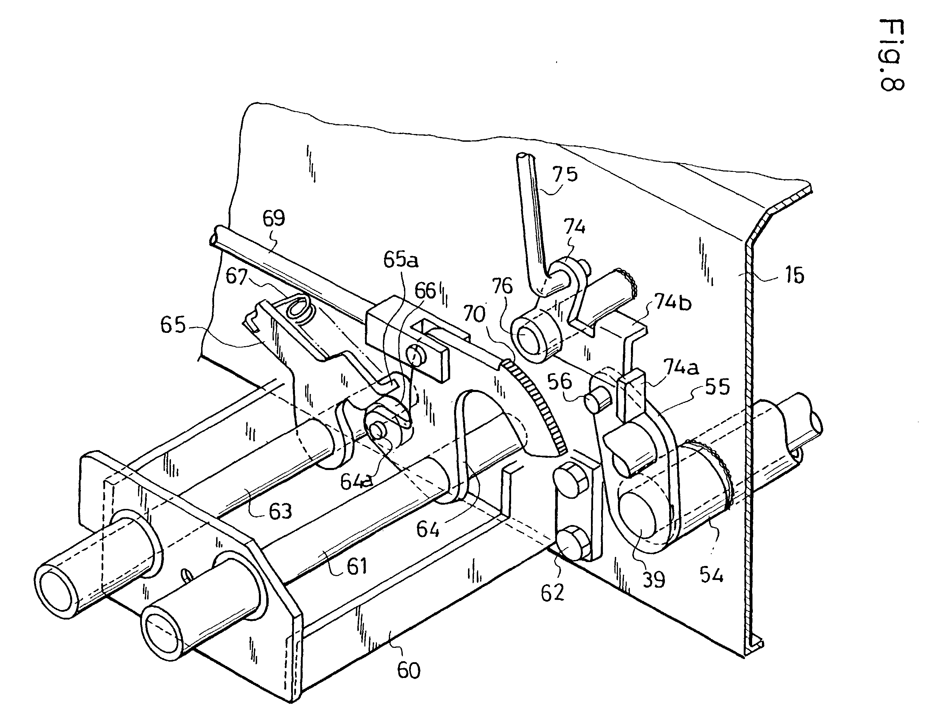

Next, explanation will be given on a cruising control mechanism which can fix and release the forward pedals 8F to and from a desired forward travel-operating position. As shown in Figs.7 and 8, the utmost end of the second leg of the arm 64 forwardly bends in a circular arc and is provided with a ratchet 70, on the upper surface thereof are formed a large number of teeth longitudinally in a row, a support shaft 76 projects from the outer side surface of the vehicle body frame 15 positioned in front of the ratchet 70, a locking arm 74 is swingably pivoted to the support shaft 76, a downwardly extending locking pawl 74a is formed on the free end of the locking arm 74, and the locking pawl 74a is disposed above the ratchet 70 so as to be engageable with the ratchet 70.

At the locking arm 74 is formed an abutting portion 74b bent inwardly in an L-like-shape. A lock releasing pin 56 projects toward the locking arm 74 from the mounting bracket 55 supporting the master brake pedal 10. The abutting portion 74b at the locking arm 74 is positioned on the locus of swinging motion of the lock releasing pin 56, so that, when the master brake pedal 10 is trod to clockwise rotate the mounting bracket 55 around the first brake pedal shaft 39, the lock releasing pin 56 abuts against the abutting portion 74b of the locking arm 74, thereby counterclockwise rotating the locking arm 74 around the support shaft 76.

The locking arm 74 (in Fig. 2) connects with the lower end of a rod 75, which is connected at the upper end thereof to a cruise control lever 86 laterally adjacent (at the right side in this embodiment) to the parking lever 59a as shown in Fig. 11. The cruising control mechanism comprising the rod 75, locking arm 74, ratchet 70 and so on, is housed in the space formed rightwardly downwardly of the dashboard 2 so as to be protected from outside.

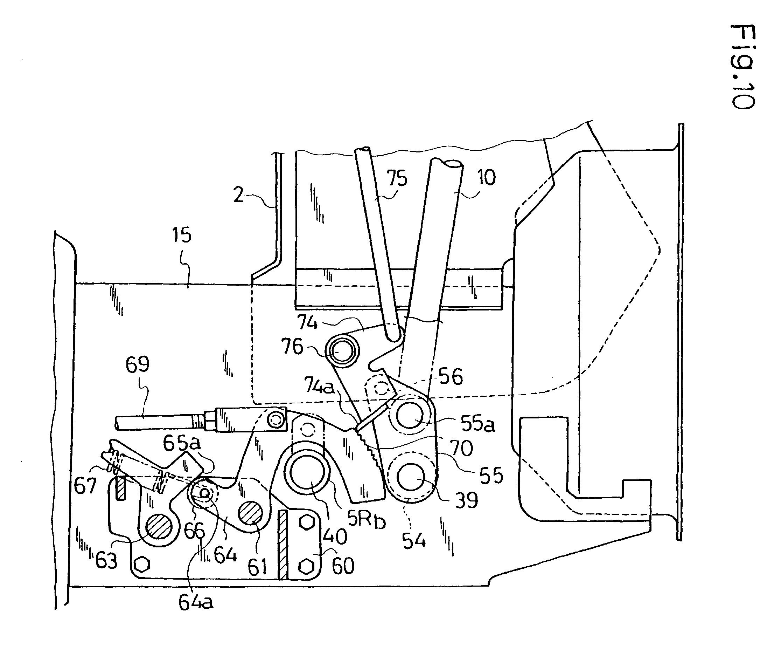

In such construction, when the operator lifts the cruise control lever 86 from the position thereof as shown in Fig. 1, the rod 75 is pushed down so as to clockwise rotate the locking arm 74 around the support shaft 76 as shown in Fig. 10, so that the locking pawl 74a engages with the predetermined tooth of the ratchet 70 fixed to the arm 64. Herein, the arm 64 is subject to the counterclockwise force generated around the first pedal shaft 61 by the above-mentioned neutral bias spring and the hydraulic reaction of the hydraulic stepless transmission 52, and the locking pawl 74a and the teeth of ratchet 70 are formed by setting the forms thereof to generate a predetermined frictional-holding force at the engaging portion thereof, whereby, even when the operator releases the cruise control lever 86, the locking of the locking pawl 74a is maintained. Thus, the forward pedal 5F can be fixed to the predetermined forward traveling operation position. And, even when the operator releases the forward pedal 5F, the hydraulic stepless transmission 52 is continuously driven and the vehicle body runs while keeping the constant car speed.

In a case that the master brake pedal 10 is trod to exert the braking effect of the left and right braking units, the lock releasing pin 56 projecting from the mounting bracket 55 shifts clockwise around the first brake pedal shaft 39 to abut against the abutting portion 74b of the abutting arm 74, the locking arm 74 receives the forces from the lock releasing pin 56a and tension spring 74c so as to rotate counterclockwise around the support shaft 76, so that the locking pawl 74a forcibly disengages from the tooth of ratchet 70. Hence, the forward pedal 8F is released from fixing, so that the speed control arm of the hydraulic stepless transmission 52 and the forward pedal 8F are subject to the action of the neutral braking spring and to the hydraulic reaction so as to return to the neutral position, and the vehicle stops without stop of engine E. In addition, when the locking arm 74 is counterclockwise rotated, the rod 75 is upwardly pushed to shift the cruise control lever 86 in the releasing direction. Hence, when tne vehicle forwardly travels again, the operator continuously treads the forward pedal 8F until a desired vehicle speed is obtained, and the cruise control lever 86 is again lifted so as to enable the forward traveling state at the constant vehicle speed to be obtained.

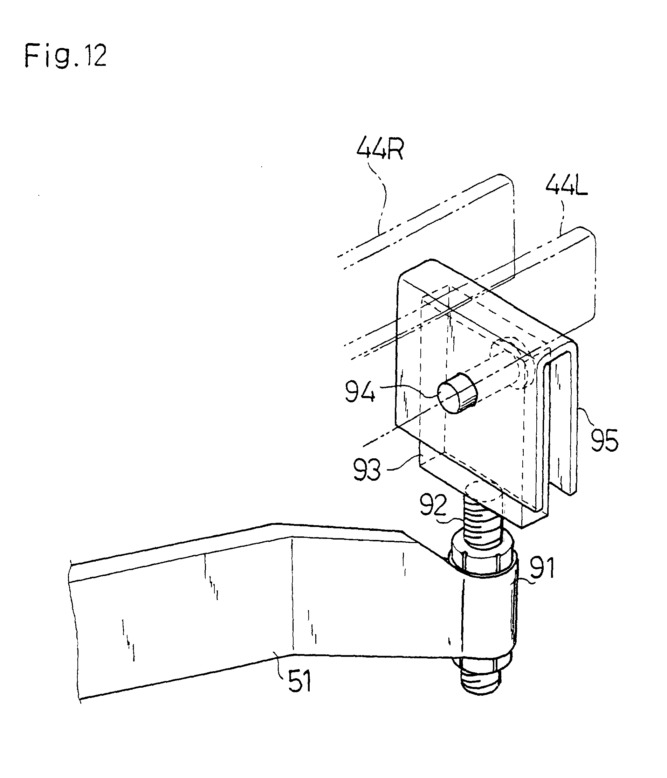

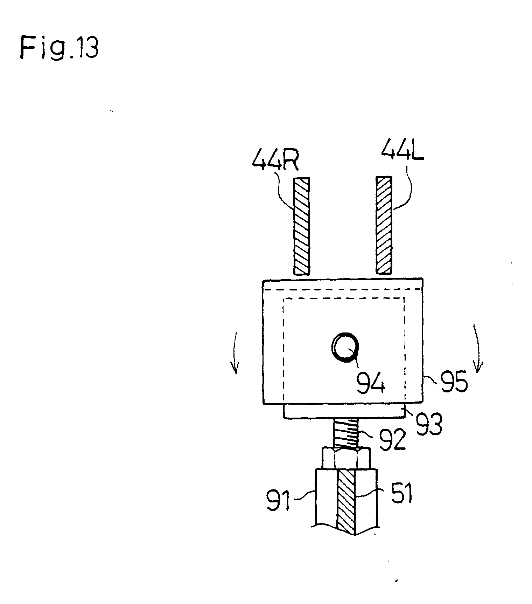

In addition, the above-mentioned abutting timing adjusting mechanism with respect to the left and right turn brake pedals 5L and 5R may use that with the equalizer function as shown in Figs. 12 and 13. In detail, one mounting member 91 is welded to the free end of the abutting arm 51 in a manner of vertically directing a screw bore, with which a bolt 92 is screwably attached in a manner of freely advancing, retreating and fixing, and a support plate 93 is perpendicularly welded onto the head of the bolt 92. A pivot pin 94 axially longitudinally extending is mounted on the lateral center of the support plate 93, and a swinging member 95 U-like-shaped in section and of a length across the abutting strips 44L and 44R is covered on the support plate 93 to be supported by the pivot pin 94 so as to be freely laterally swingable around the pivot pin 94. In the state that the master brake pedal 10 is trod when the left and right braking units are not laterally equally idling, the swinging member 95 is slanted at the upper end thereof leftwardly or rightwardly, when abutting at the upper end thereof against the abutting strips 44L and 44R, so as to function to simultaneously lift both the abutting strips 44L and 44R in the slanting state.

The present invention constructed as the above-mentioned has the following effect:

The speed changing member for the stepless transmission can artificially be held in the desired speed change position, and the cruising control mechanism, which is interlocked to release the locking by treading the master brake pedal, is disposed at one lateral side in the dashboard, and the parking locking mechanism, which can be held in the treading position of the master brake pedal, is disposed at the other lateral side, whereby the cruising control mechanism and parking lock mechanism are contained in the dashboard, so that the effect by entering dust or water therein is reduced, resulting in that the engaging portions and pivotally mounting portions can be prevented as much as possible from clogging and not-well-engagement and from not-smooth rotation. Also, the link construction for the respective cruising mechanism can be laterally divided and compactly disposed in the dashboard.

The operating instruments for actuating the cruising control mechanism and parking locking mechanism are disposed in the dashboard, and, on the other hand, on the lateral side wall of the vehicle body frame covered with the lower end of the dashboard is pivotally supported the pawl engageable with the locking member interlocked with the speed change instrument of the stepless transmission, and on the other lateral side is pivotally supported the pawl engageable with the locking member interlocked with the master brake pedal, whereby the locking pawls for the cruising control mechanism and parking locking mechanism are laterally divided from each other so as not to interfere with each other, thereby enabling the respective locking mechanisms to be simple in construction.

The speed changing instrument comprises the forward pedal trod when the vehicle body forwardly travels and the reverse pedal trod when the same rearwardly travels, both the pedals being constructed to a single pedal unit detachably mounted on one lateral side wall of the vehicle body, whereby the speed changing instrument can be simple in assembly and disassembly.

Also, the operating instrument for actuating the cruising control mechanism is disposed at one lateral side of the rear surface of the dashboard where the cruising control mechanism is disposed, and the operating instrument for actuating the parking locking mechanism is disposed at the other lateral side where the parking locking mechanism is disposed, the two operating instruments are juxtaposed on the rear surface of the dashboard in front of the operator's seat in the state of being well visible and are suitable for a small-sized working vehicle restricted in an installation space.

## Claims

1. A traveling operation device for a working vehicle comprising
a cruising control mechanism, which can artificially hold a speed changing instrument (8F,8R) in a desired speed change position for a stepless transmission biased to the neutral side and which is adapted to be interlocked therewith so as to allow release of the locking state by treading a master brake pedal (10), and
a parking lock mechanism, which can hold said master brake pedal (10) in the position where said master brake pedal is trod,
wherein an operating instrument (86) for actuating said cruising control mechanism and an operating instrument (59a) for actuating said parking locking mechanism are respectively disposed on a dashboard (2) of said vehicle, **characterised in that** said cruising control mechanism and said parking lock mechanism are disposed respectively at one and the other lateral sides of a vehicle body frame (15) within said dashboard (2),
a locking pawl (74a) engageable with a locking member (64,70) interlocked with said speed changing instrument. (8F,8R) for said stepless transmission is swingably pivoted onto one lateral side wall of said vehicle body frame (15) covered with the lower end of said dashboard (2), and
a locking pawl (49a) engageable with a locking member (46,47) interlocked with said master brake pedal (10) is swingably pivoted onto the other lateral side wall of said vehicle body frame (15) in the state that each of said locking pawls (74a,49a) interlocks with its respective operating instrument (86,59a).

2. A traveling operation device for a working vehicle as set forth in claim 1, wherein said speed changing instrument comprises a forward pedal (8F), which is trod when said vehicle is to travel forwardly, and a reverse pedal (8R), which is trod when said vehicle is to travel rearwardly, both said pedals (8F,8R) being constructed into a single pedal unit detachably mountable onto one lateral side wall of said vehicle body frame (15).

3. A traveling operation device for a working vehicle as set forth in claim 1 or 2, wherein on the rear surface of said dashboard (2) are juxtaposed said operating instrument (86) for actuating said cruising control mechanism and said operating instrument (59a) for actuating said parking lock mechanism.

## Patentansprüche

1. Bewegungs-Betätigungsvorrichtung für ein Arbeitsfahrzeug mit
einem Bewegungssteuermechanismus bzw. Cruise-Control-Mechanismus, der künstlich ein Geschwindigkeitswechselinstrument (8F,8R) in einer gewünschten Geschwindigkeitswechselposition für ein zur neutralen Seite hin vorbelastetes stufenloses Getriebe halten kann, und der mit dieser verriegelt zu werden vermag, um eine Freigabe des Verriegelungszustands durch Treten eines Hauptbremspedals (10) zu ermöglichen, und
einem Parkverriegelungsmechanismus, der das Hauptbremspedal (10) in der Position halten kann, in der das Hauptbremspedal getreten ist,
wobei ein Betätigungsinstrument (86) zum Betätigen des Cruise-Control-Mechanismus und ein Betätigungsinstrument (59a) zum Betätigen des Parkverriegelungsmechanismus jeweils an dem (einem) Schaltbrett (2) angeordnet sind,
**dadurch gekennzeichnet, dass** der Cruise-Control-Mechanismus und der Parkverriegelungsmechanismus jeweils an einer und der anderen lateralen Seite eines Fahrzeugkörperrahmens (15) innerhalb eines (des) Schaltbretts (2) des Fahrzeugs angeordnet sind,
eine Verriegelungsklaue (74a), die mit einem Verriegelungselement (64,70) in Eingriff bringbar ist, das mit dem Geschwindigkeitswechselinstrument (8F,8R) für das stufenlose Getriebe verriegelt ist, das schwenkbar an einer lateralen Seitenwand des Fahrzeugkörperrahmens (15), die mit dem unteren Ende des Schaltbretts (2) bedeckt ist, gelenkig verbunden ist, und
eine Verriegelungsklaue (49a), die mit einem mit dem Hauptbremspedal (10) verriegelten Verriegelungselement (46,47) in Eingriff bringbar ist, schwenkbar an der anderen lateralen Seitenwand des Fahrzeughauptkörpers (15) in dem Zustand gelenkig verbunden ist, dass jede der Verriegelungsklauen (74a,49a) mit ihrem jeweiligen Betätigungsinstrument (86,59a) verriegelt ist.

2. Bewegungs-Betätigungsvorrichtung für ein Arbeitsfahrzeug nach Anspruch 1, wobei das Geschwindigkeitswechselinstrument ein Vorwärtspedal (8F), das getreten wird, wenn sich das Fahrzeug nach vorne bewegen soll, und ein Rückwärtspedal (8R), das getreten wird, wenn sich das Fahrzeug nach hinten bewegen soll, umfasst, wobei beide Pedale (8F,8R) zu einer einzigen Pedaleinheit aufgebaut sind, die abnehmbar an einer lateralen Seitenwand des Fahrzeugkörperrahmens (15) anbringbar ist.

3. Bewegungs-Betätigungsvorrichtung für ein Arbeitsfahrzeug nach Anspruch 1 oder 2, wobei an der Rückfläche des Schaltbretts (2) das Betätigungsinstrument (86) zum Betätigen des Cruise-Control-Mechanismus und das Betätigungsinstrument (59a) zum Betätigen des Parkverriegelungsmechanismus nebeneinander angeordnet sind.

## Revendications

1. Dispositif d'actionnement pour déplacement d'un véhicule de travail, comportant
un mécanisme régulateur d'allure, qui peut maintenir de manière artificielle un instrument de changement de vitesse (8F, 8R) dans une position de changement de vitesse souhaitée pour une transmission en continu rappelée vers le côté neutre, et qui est adapté pour être verrouillé mutuellement avec celui-ci, de manière à permettre une libération de l'état de verrouillage en actionnant au pied une pédale de frein maître (10), et
un mécanisme de verrouillage en stationnement, qui peut maintenir ladite pédale de frein maître (10) dans la position dans laquelle ladite pédale de frein maître est actionnée au pied,
dans lequel un instrument d'actionnement (86) destiné à actionner ledit mécanisme régulateur d'allure et un instrument d'actionnement (59a) destiné à actionner ledit mécanisme de verrouillage en stationnement sont, respectivement, disposés sur ledit tableau de bord (2),
**caractérisé en ce que** ledit mécanisme régulateur d'allure et ledit mécanisme de verrouillage en stationnement sont disposés respectivement au niveau de l'un et l'autre côté latéral d'un châssis de carrosserie de véhicule (15) dans un tableau de bord (2) dudit véhicule,
un cliquet de verrouillage (74a) pouvant venir en prise avec un élément de verrouillage (64, 70) verrouillé mutuellement avec ledit instrument de changement de vitesse (8F, 8R) de ladite transmission en continu est pivoté de manière basculante sur une paroi latérale dudit châssis de carrosserie de véhicule (15) recouverte de l'extrémité inférieure du tableau de bord (2), et
un cliquet de verrouillage (49a) pouvant venir en prise avec un élément de verrouillage (46, 47) verrouillé mutuellement avec ladite pédale de frein maître (10) est pivoté de manière basculante sur l'autre paroi latérale dudit châssis de carrosserie de véhicule (15) dans l'état où chacun desdits cliquets de verrouillage (74a, 49a) se verrouille mutuellement avec son instrument d'actionnement respectif (86, 59a).

2. Dispositif d'actionnement pour déplacement d'un véhicule de travail selon la revendication 1, dans lequel ledit instrument de changement de vitesse comporte une pédale de marche avant (8F), qui est actionnée au pied lorsque ledit véhicule doit se déplacer vers l'avant, et une pédale de marche arrière (8R), qui est actionnée au pied lorsque ledit véhicule doit se déplacer en marche arrière, lesdites pédales (8F, 8R) étant construites en une seule unité formant pédale pouvant être montée de manière détachable sur une paroi latérale dudit châssis de carrosserie de véhicule (15).

3. Dispositif d'actionnement pour déplacement d'un véhicule de travail selon la revendication 1 ou 2, dans lequel, sur la surface arrière dudit tableau de bord (2), sont juxtaposés ledit instrument d'actionnement (86) destiné à actionner ledit mécanisme régulateur d'allure et ledit instrument d'actionnement (59a) destiné à actionner ledit mécanisme de verrouillage en stationnement.
